# EUROPÄISCHE PATENTANMELDUNG

(11) **EP 2 110 341 A1**
(43) Veröffentlichungstag der Anmeldung: **21.10.2009**
(21) Anmeldenummer: 08007313.3
(22) Anmeldetag: 14.04.2008
(51) Int. Cl.: B65G 17/02, E01C 19/48

(54) **Förderband**

(71) Anmelder: Joseph Voegele AG, 68146 Mannheim (DE)
(72) Erfinder: Fickeisen, Steffen, 67098 Bad Dürkheim (DE)
(74) Vertreter: Grünecker, Kinkeldey, Stockmair & Schwanhäusser Anwaltssozietät

(57) **Zusammenfassung**

In einem Förderband (M), insbesondere für Beschicker und/oder Straßenfertiger, mit einem Fördersubstrat (4) aus einem flexiblen Fördergurt (11) und an dessen Unterseite festgelegten Querstäben (12), und mit an beiden Seitenrandbereichen des Fördersubstrats an form- oder kraftschlüssigen Antriebssystemen angeordneten Zugmitteln (Z), die mit den Seitenrandbereichen verbunden sind, sind die Querstäbe (12) biegsam und/oder gelenkig und/oder vorgebogen ausgebildet, und bildet das Fördersubstrat (4) zumindest im Fördertrum (OT) eine oben offene, konkave Mulde (T).

## Beschreibung

Die Erfindung betrifft ein Förderband gemäß Oberbegriff des Patentanspruchs 1.

Zum Fördern zähflüssigen Einbauguts wie bituminösem Einbaugut oder Betoneinbaugut, oder auch von Sand oder Kies, sind z.B. im Straßenbau Förderbänder in der Praxis im Einsatz, die nach Art von Kratzerbändem ausgebildet sind, jedoch gerade Querstäbe an der der Förderseite angewandten Unterseite eines flachen Gummi-Fördergurts aufweisen. Unter der Belastung des Förderguts können sich die Querstäbe dank der Flexibilität des Gummi-Fördergurts durchdrücken, so dass die Förderung durch die entstehende Querrippenstruktur unterstützt wird. Das Fördersubstrat aus dem Gummi-Fördergurt und den unten daran festgelegten Querstäben ist im Querschnitt vollständig eben. Die Zugmittel sind beispielsweise Gliederketten, an denen die Enden der Querstäbe fixiert sind. Damit das Fördergut nicht seitlich herabfällt, insbesondere wenn das Förderband ansteigt, sind vertikale Seitenwände stationär installiert, deren untere Ränder möglichst knapp bei der Förderseite des Förderbandes liegen. Durch die Konsistenz der Fördergüter kommt es in Kontaktbereichen mit den Seitenwänden zur Entmischung, wenn das Fördergut dort lokal verlangsamt wird. Daraus resultiert ein hoher Bewegungswiderstand des Förderbands. Ferner neigt insbesondere klebriges Fördergut zum zunehmenden Anhaften an den Seitenwänden, die deshalb häufig gereinigt werden müssen. Schließlich lässt sich oftmals Kontakt zwischen dem Fördergurt und den Rändern der Seitenwände nicht vermeiden, woraus starker Verschleiß des Fördergurtes in den Seitenrändern und zyklisch zunehmender Bewegungswiderstand resultieren.

Aus DE-A-2628325 ist ein echtes Kratzerförderband bekannt, bei dem die zwischen Gliederketten fixierten Querstäbe auf dem ebenen Boden einer Förderrinne, rutschen und das Fördergut mitnehmen. Die ebene Förderrinne wird von Seitenwänden begrenzt.

DE-A-3834313 zeigt einen Straßenfertiger mit einem Förderband, das nur auf eine Mulde bildenden Führungsrollen läuft, wobei oberseitig Kratzerquerstäbe vorgesehen sind, deren jeder aus drei mit Zwischenabständen fluchtenden Stababschnitten besteht.

EP-A-1213390 A zeigt einen Beschicker mit einem Förderband, das zumindest im Fördertrum eine Mulde bildet. Das Förderband ist entweder ein Gummifördergurt, ggf. mit einer Verstärkung, oder besteht aus einem Metallgewebe. In einer Ausführungsform ist das Förderband ein Kratzerband mit gebogenen oder abgekröpften Stäben, die ohne Fördergurt seitlich von Gliederketten geführt sind, und entlang des Grundes eines stationären Troges gleiten.

US-A-3545602 offenbart ein Mulden-Förderband auf Stützrollen und mit stationären Seitenwänden.

GB-A-1380573 zeigt schließlich ein Muldenförderband, das in einer konkaven Wanne gleitet, wobei von oben stationäre Seitenwände nach unten greifen.

Der Erfindung liegt die Aufgabe zugrunde, ein Förderband der eingangs genannten Art zu schaffen, das speziell zum Fördern an sich schwierig zu fördernder Fördergüter wie Einbaugut, Mischgut, Kies, Sand, oder dergleichen geeignet ist, und mit geringem Bewegungswiderstand über lange wartungsfreie Zyklen laufen kann.

Die gestellte Aufgabe wird mit den Merkmalen des Patentanspruchs 1 gelöst.

Da das Förderband als Muldenförderband ausgebildet ist, wird das Fördergut im Wesentlichen in der Mitte in einem vertieften Bereich konzentriert und mit der sich bildenden Querrippenstruktur auch formschlüssig gefördert. Die Muldenform nutzt die Schwerkraft und das Haftvermögen im Fördergut, um zu verhindern, dass das Fördergut zu den Seitenrandbereichen wegfließt, so dass keine Seitenwände gebraucht werden. Dank der seitenwandfreien Muldenform unterbleibt bei Einbaugut oder Mischgut eine Entmischung, bleibt der Bewegungswiderstand gering, und gibt es an dem Fördergurt keinen durch Kontakt mit stationären Elementen hervorgerufenen Verschleiß. Das Förderband ist speziell zur Verwendung in Baumaschinen wie Beschickern oder Straßenfertigern zweckmäßig, um zähflüssiges, klebriges, heißes Einbaugut oder Mischgut oder auch Kies bzw. Sand zu fördern. Das Förderband ist auch allgemein in der Fördertechnik oder in Stetigförderern gleichermaßen zweckmäßig, und auch in Förderstrecken, die aufwärts oder abwärts geneigt sind. Für die Gestaltung der Querstäbe an der Unterseite des Fördergurts sind somit drei alternative oder additive Vorgangsweisen zweckmäßig. Biegsame Querstäbe ermöglichen unter Schwerkrafteinfluss und/oder durch die Führung des Fördersubstrats an den Antriebssystemen die angestrebte Muldenform. Dies gilt auch für gelenkige Querstäbe. Falls in den Umkehrbereichen des Förderbandes keine durchgehenden Umlenkwalzen vorgesehen sind, die die Muldenform abflachen, können die Querstäbe starr und/oder etwas federnd mit einer vorgeformten Biegung entsprechend der gewünschten Muldenform ausgebildet sein. Diese drei Konzepte können auch kombiniert werden.

Dank der biegsamen und/oder gelenkig ausgebildeten Querstäbe und der Flexibilität des Fördergurts wird unter dem Gewicht des Förderguts und/oder vorgegeben durch die Antriebssysteme und die Zugmittel eine relativ tiefe Mulde gebildet, in der das Fördergut relativ zentral gefördert wird. Die Querstäbe könnten aber auch starr und mit der gewünschten Muldenform vorgebogen sein. Die Querstäbe drücken sich gegebenenfalls dank der Flexibilität des Fördergurts durch und unterstützen dann die Förderwirkung in Anstiegen oder abwärts geneigten Förderstrecken. Die Mulde liegt vorzugsweise entlang des Fördertrums vor, und kann an den Umkehrbereichen des Förderbandes weitgehend verflacht werden, oder geht sogar durch bis in die Umkehrbereiche, z.B. wo das Fördergut vom Förderband herabfällt. Die Querstäbe können aus Kunststoff oder unter Verwendung von Kunststoff ausgebildet sein, oder aus Metall, und können Vollquerschnitt haben oder hohl sein. Da die Querstäbe über ihre Querstablänge durchgehen, auch in der gelenkigen Ausführung, bewirken sie eine über die Weite des Förderbands effiziente Abstützung des Fördergurts, der damit in Querrichtung kaum Zugspannungen unterworfen wird. Es ist aber auch eine Ausführungsform denkbar, bei der die Querstäbe in Querrichtung Unterbrechungen aufweisen, so dass dann der Fördergurt Querzugspannungen aufzunehmen hat.

Bei einer zweckmäßigen Ausführungsform ist der Fördergurt aus ggf. verstärktem Gummi oder Elastomer ausgebildet, und/oder aus einem Metallgewebe. Der Fördergurt ist flexibel, kann jedoch in Quer- und Längsrichtung relativ zugfest sein.

In dem Förderband kann das Fördersubstrat entweder über die Querstäbe oder den Fördergurt selbst mit den Zugmitteln verbunden sein. Alternativ könnten sowohl die Querstäbe als auch der Fördergurt mit den Zugmitteln verbunden werden.

Bei einer zweckmäßigen Ausführungsform haben entweder die Querstäbe oder der Fördergurt in den Randbereichen Überstände.

Alternativ könnten die Querstäbe und der Fördergurt in den Randbereichen bündig abschließen.

Für die Befestigung der Querstäbe an dem Fördergurt gibt es mehrere Möglichkeiten. So könnten die Querstäbe an der Unterseite des Fördergurts in diesen integriert sein, z.B. eingeformt oder eingeschoben. Alternativ könnten sie angeklebt, anvulkanisiert, angeschraubt, angenietet oder eingeklipst sein.

Jeder gelenkige Querstab sollte mindestens ein Gelenk aufweisen, um die Muldenform zuzulassen. Vorzugsweise sind zwei Gelenke beiderseits der Längsmitte des Fördersubstrats vorgesehen.

Bei einer zweckmäßigen Ausführungsform sind die Zugmittel Gliederketten, und sind die Querstäbe an Kettenbolzen und/oder Kettenlaschen der Gliederkette befestigt. Anstelle von Gliederketten könnten jedoch auch zahn- oder keilriemenartige Riemenschlaufen vorgesehen sein, an denen die Querstäbe und/oder der Fördergurt stellenweise befestigt sind.

Jede Gliederkette könnte auf einzelnen oder zwischen paarweise angeordneten, oberen und unteren Rädern geführt sein. Hier bieten sich zweckmäßig Kettenräder an, die zwischen die Kettenglieder eingreifen, oder Reibräder, auf denen oder zwischen denen die Gliederkette läuft. Reibräder könnten auch für Riemenschlaufen als Zugmittel zweckmäßig sein.

In einer zweckmäßigen Ausführungsform sind die Räder, zumindest entlang des Fördertrums, um schräg gestellte Achsen drehbar, die im Bereich der Mulde in etwa parallel zu Tangenten an die Randbereiche des Fördersubstrats sind. Auf diese Weise wird die Muldenform zumindest zum Teil auch ohne Belastung durch das Fördergut bereits durch die Antriebssysteme vorgegeben.

In Umkehrbereichen des Förderbandes kann die Muldenform weitgehend verflacht sein. Dann sind, vorzugsweise, die Querabstände zwischen Umlenkrädern der Gliederketten bzw. Riemenschlaufen in den Umkehrbereichen größer als die Querabstände zwischen Rädern entlang der Mulde. Dies begünstigt die allmähliche Streckung des Fördersubstrats in den Umkehrbereichen.

Bei einer alternativen Ausführungsform werden die Zugmittel, vorzugsweise Gliederketten, in C-förmigen Führungen, z.B. mit Kunststoffeinsatzteilen, geführt und abgestützt.

Wichtig ist, dass die Förderseite des Förderbandes in den Randbereichen des Fördersubstrats seitenwandfrei exponiert ist. Seitenwände können deswegen weggelassen werden, weil das Fördergut dank der Muldenform in der Mitte des Förderbandes verbleibt.

Schließlich können die Querstäbe aus Kunststoff oder Metall bestehen und einen viereckigen, vorzugsweise rechteckig bandartigen, einen runden, einen ovalen, oder einen angenähert trapez- oder dreieckförmigen Querschnitt aufweisen. Die Querschnittsfläche jedes Querstabs kann über die Querstablänge konstant sein oder variieren. Beispielsweise ist es möglich, die Querschnittsfläche im Mittelbereich größer oder kleiner zu machen als in den Randbereichen, um eine erhöhte Biegsamkeit oder erhöhte Steifigkeit im Mittelbereich zu erzeugen.

Ausführungsformen des Erfindungsgegenstandes werden anhand der Zeichnung erläutert.
Es zeigen:
- Fig. 1: eine schematische Seitenansicht einer Baumaschine, verkörpert durch einen Beschicker, wie er im Straßenbau eingesetzt wird, mit einem Förderband,
- Fig. 2: einen Querschnitt durch eine erste Ausführungsform des Förderbands,
- Fig. 3: einen Querschnitt durch eine weitere Ausführungsform des Förderbands,
- Fig. 4: Teil eines Querschnitts zur Verdeutlichung eines Antriebs- und/oder Führungssystems,
- Fig. 5: eine schematische Seitenansicht zur Verdeutlichung eines Antriebs- und/oder Führungssystems, und
- Fig. 6: Teil eines Querschnitts zur Verdeutlichung eines seitlichen Führungssystems des Förderbands.

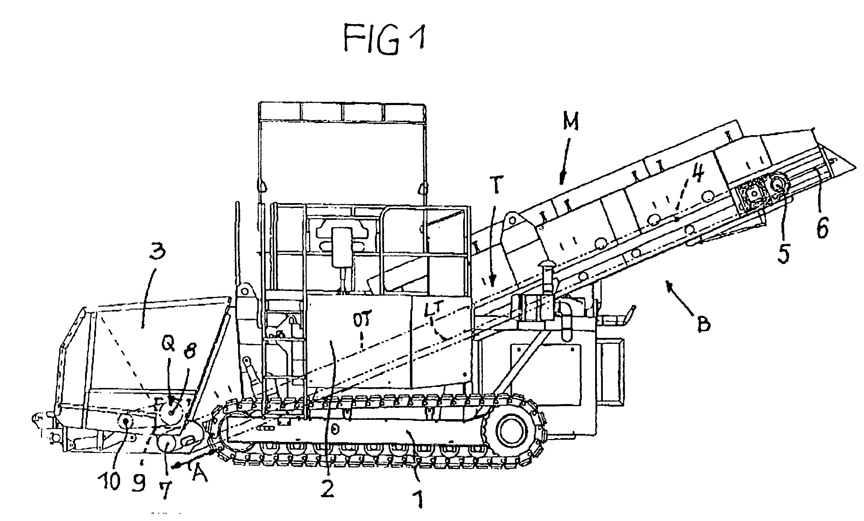

Fig. 1 zeigt einen Beschicker B zum Versorgen beispielsweise von Straßenfertigern mit haftfreudigem und/oder zum Erstarren neigenden Fördergut, insbesondere heißem bituminösem Misch- oder Einbaugut, Betoneinbaugut, oder auch Kies, Sand oder dergleichen. Der Beschicker B ist selbstfahrend, weist ein Fahrwerk 1 an einem Unterbau 2 und einen frontseitigen Bunker 3 auf, der von vorne oder oben oder seitlich befüllbar ist. Im Unterbau 2 erstreckt sich ausgehend vom Bunker ein Förderband M nach hinten oder nach hinten und oben, das im Wesentlichen in Längsrichtung des Beschickers B orientiert ist, und ggf. angehoben oder abgesenkt oder auch seitlich verschwenkt werden kann. Das Förderband M enthält ein endloses Fördersubstrat 4, das in Umkehrbereichen an Umlenkräder 7, 5 und auch dazwischen in Antriebs- und Abstützsystemen abgestützt und geführt ist. Die oberen Umlenkräder 5 können als Antrieb fungieren und sind beispielsweise durch eine Spannvorrichtung 6 beaufschlagt.

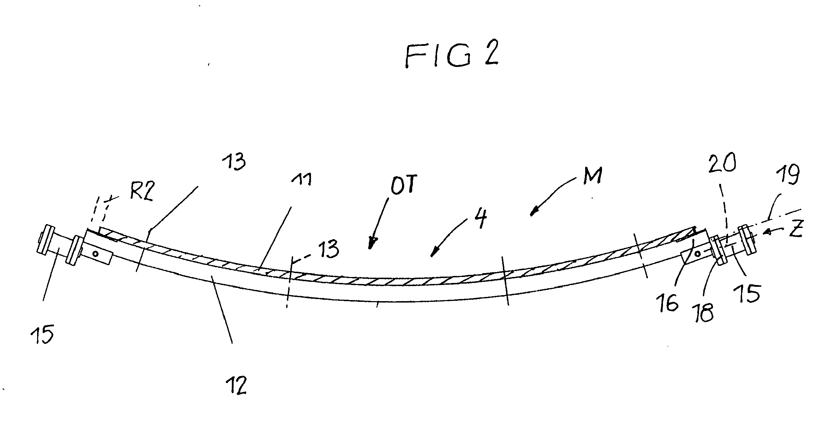

Im Bunker 3 sind hier Querförderer Q angeordnet, die nahe bei den Umlenkrädern 7 Fördergut auf das Förderband M bringen. Die Querförderer Q können von Wannen untergriffene Förderschnecken mit Antriebswellen 8 sein, die in Lagerungen 9 abgestützt sind. Ein Fördertrum OT in Form einer Mulde T des Förderbandes M wird entlang eines Abschnitts abgestützt und geführt, innerhalb dessen die äußeren Randbereiche des Fördersubstrats 4 (Fig. 2) schräg nach oben angestellt sind, so dass zumindest zwischen den Umlenkrädern 7, 5 eine Mulde T gebildet wird. Diese Mulde T kann, wie erwähnt, an den Umlenkrädern 7, 5 abgeflacht sein, oder sich auch zwischen den Umlenkrädern 7, 5 fortsetzen.

Fig. 2 zeigt einen schematischen Querschnitt durch eine erste Ausführungsform des Förderbands M. Das Fördersubstrat 4 enthält einen Fördergurt 11, der ein Gummi- oder Elastomer-Fördergurt, gegebenenfalls mit Verstärkungen, oder ein Metallgewebe-Fördergurt sein kann und über die Breite im Wesentlichen gleiche Stärke besitzt. An der der Förderseite abgewandten Unterseite des Fördergurts 11 sind beispielsweise in gleichen Intervallen Querstäbe 12 angebracht. Die Querstäbe 12 können beispielsweise in die Unterseite des Fördergurts 11 integriert sein, oder daran angeklebt, angenietet, angeschraubt, anvulkanisiert oder eingeklipst.

In Fig. 2 stehen in den Randbereichen die Querstäbe 11 mit Überständen R2 über die Ränder des Fördergurts 11 vor. In diesen Bereichen sind die Querstäbe 11 mit an beiden Seiten des Fördersubstrats 4 angeordneten Zugmitteln Z verbunden, beispielsweise mit Gliederketten 15 (alternativ mit keilriemenartigen oder zahnriemenartigen Riemenschlaufen, nicht gezeigt). Die Querstäbe 12 sind beispielsweise mit Befestigungselementen 17 an Gelenkbolzen und/oder Laschen 18 der Gliederkette 15 lösbar festgelegt. Mit 20 angedeutete Gelenkachsen der Gliederkette 15 sind in etwa parallel zu einer Tangente 19 an die Randbereiche des Fördersubstrats 4 schräggestellt. Die Bezugsziffern 13 deuten Verbindungsstellen zwischen den Querstäben 12 und dem Fördergurt 11 an.

Die Querstäbe 12 sind entweder biegsam oder mit einer vorgeformten Biegung versehen, und im Wesentlichen starr. Die Muldenform kann durch die Schrägstellung der Zugmittel unterstützt werden. Alternativ können die Zugmittel auch mit ihren Achsen 20 horizontal angeordnet sein, so dass dann das Fördersubstrat 4 durch seine Flexibilität und/oder durch das Lastgewicht des Förderguts in die Muldenform durchsackt. Beide Randbereiche des Fördersubstrats 4 sind seitenwandfrei exponiert angeordnet. Das Fördergut wird im Wesentlichen in der Mitte der Mulde konzentriert gefördert, wobei sich dank der Flexibilität des Fördergurtes 11 die Querstäbe 12 gegebenenfalls etwas nach oben durchdrücken können, um in der Förderseite des Fördersubstrats 4 fördernde Rippen zu definieren.

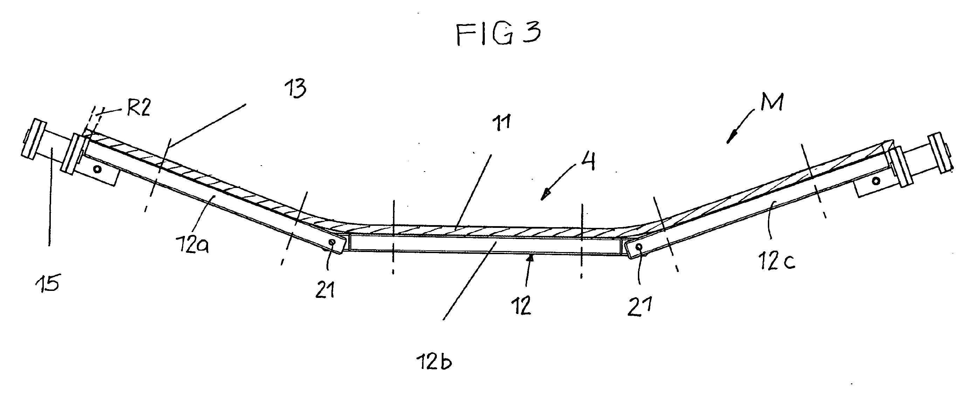

In der Ausführungsform in Fig. 3 sind die Querstäbe 12 im Fördersubstrat 4 mit mindestens einem Gelenk 21, vorzugsweise zwei Gelenken symmetrisch zur Längsmittellinie des Fördersubstrats 4, versehen, so dass jeder Querstab 12 beispielsweise drei Querstababschnitte 12a, 12b, 12c umfasst. Die Querstababschnitte 12a, 12b, 12c können starr sein, oder ebenfalls biegsam, oder können auch eine starre, vorgebogene Form haben. In Fig. 3 steht der Fördergurt 11 mit Überständen R1 über die Enden der Querstäbe 12 nach außen vor.

Bei einer nicht gezeigten Alternative könnten die Ränder des Fördergurts 11 mit den Zugmitteln Z verbunden sein, oder sowohl die Ränder des Fördergurts 11 als auch die Enden der Querstäbe 12. Es ist vorteilhaft, wenn die angeschlossenen Querstäbe 12, einschließlich der Gelenke 21, zugfest sind, um die Last des Förderguts gleichmäßig in die Zugmittel Z zu übertragen.

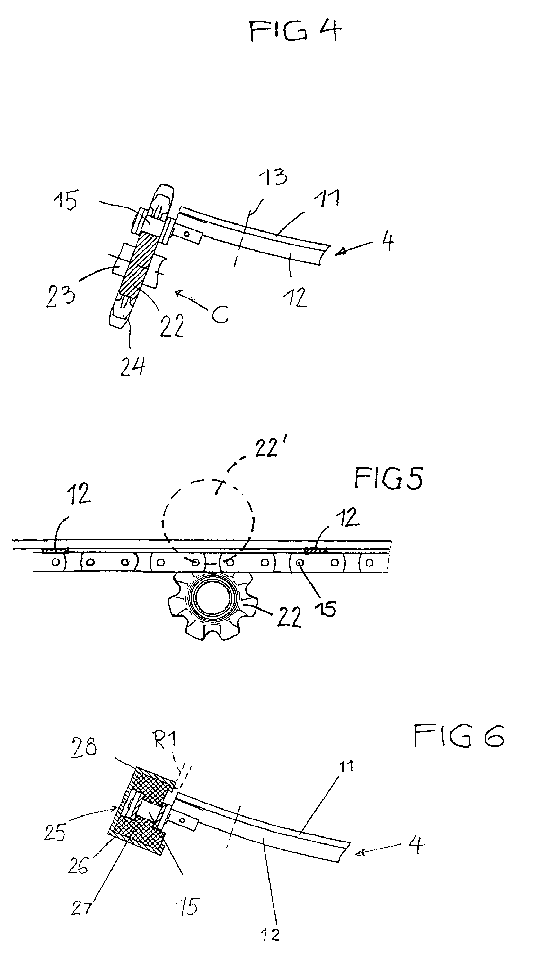

Fig. 4 verdeutlicht, wie die mit der Gliederkette 15 verbundenen Querstäbe 12 und damit das Förderband M angetrieben und/oder geführt werden. Die Gliederkette 15 wird in diesem Fall formschlüssig durch Kettenräder 22 angetrieben und/oder geführt, die um Achsen 23 drehbar sind und Kettenradzähne 24 aufweisen. Die Achsen 23 sind analog zu Fig. 2 schräggestellt. Alternativ könnten die Räder 22 auch Reibräder sein, auf denen die Gliederkette 15 läuft. Anstelle der Gliederkette 15 könnte, wie erwähnt, ein zahnriemen- oder keilriemenartiges Gebilde auf Reibrädern laufen, an dem die Querstäbe 12 und/oder der Fördergurt 11 befestigt sind.

Fig. 5 verdeutlicht eine Führung der Gliederkette 15 mit Paaren von Rädern 22, 22', beispielsweise Kettenrädern, die von oben und von unten an der Gliederkette 15 angreifen. Fig. 5 verdeutlicht auch eine viereckige, flachbandartige Querschnittsform der Querstäbe 12, die hier an der Gliederkette 15 befestigt sind.

In Fig. 6 ist eine Gleitführung 25 für die Gliederkette 15 vorgesehen, die in der Gleitführung 25 beispielsweise auf Kunststoffeinsätzen 27, 28 abgestützt ist. Die Gleitführung 25 kann ein C-förmiges durchgehendes Profil 26 als stationäre Abstützung besitzen, oder einzelne kürzere Profilabschnitte des Profils 26. Um in den Umkehrbereichen des Förderbands M die Muldenform zu verflachen, können die Räder 22 oder die Gleitführung 25 horizontal angeordnet sein, und gegebenenfalls weiter beabstandet als entlang der Mulde T, um das Fördersubstrat 4 dort sozusagen zu strecken.

Bei einer nicht gezeigten Alternative könnten beispielsweise die Enden der Querstäbe 12 über Gelenke, ähnlich den Gelenken 21, an den Zugmitteln Z bzw. den Gliederketten 15 angeschlossen sein, so dass dank dieser Gelenke die Räder 22 bzw. die Gleitführung 25 horizontal angeordnet werden können, und dennoch die Muldenform eingestellt wird.

Die Querstäbe 12 können aus Kunststoff oder Metall oder aus einem Verbund dieser Materialien bestehen, sind hohl oder mit Vollquerschnitt ausgebildet, und können einen beliebigen Querschnitt (viereckig, oval, trapezförmig, dreieckig oder dergleichen) besitzen. Die Querschnittsfläche oder Querschnittsgröße der Querstäbe kann über die Querstablänge konstant sein. Alternativ könnte die Querschnittsfläche über die Querstablänge variiert werden, beispielsweise im Mittelbereich des Fördersubstrats kleiner sein, um eine stärkere Biegsamkeit zu erzielen, oder im Mittelbereich größer sein, um dort eine größere Steifigkeit zu haben.

## Patentansprüche

1. Förderband (M), insbesondere für Beschicker (B) und/oder Straßenfertiger, mit einem Fördersubstrat (4) aus einem flexiblen Fördergurt (11) und an dessen einer Förderseite abgewandter Unterseite festgelegten Querstäben (12), und bei beiden Seitenrandbereichen des Fördersubstrats (4) zumindest entlang eines Fördertrums (OT) an form- oder kraftschlüssigen Antriebs- und/oder Führungssystemen (C) abgestützten Zugmitteln (Z), die mit den Seitenrandbereichen verbunden sind, **dadurch gekennzeichnet, dass** die Querstäbe (12) entweder biegsam und/oder gelenkig oder weitgehend starr mit einer Biegung ausgebildet sind, und dass das Fördersubstrat (4) zumindest entlang des Fördertrums (OT) eine oben offene, konkave Mulde (T) bildet.

2. Förderband nach Anspruch 1, **dadurch gekennzeichnet, dass** der Fördergurt (11) ein, gegebenenfalls verstärkter, Gummi- oder Elastomer- und/oder ein Metallgewebe-Fördergurt ist.

3. Förderband nach Anspruch 1, **dadurch gekennzeichnet, dass** die Querstäbe (12) und/oder der Fördergurt (11) des Fördersubstrats (4) mit den Zugmitteln (Z) verbunden sind bzw. ist.

4. Förderband nach Anspruch 1, **dadurch gekennzeichnet, dass** in den Randbereichen des Fördersubstrats (4) die Querstäbe (12) oder das Förderband (11) Überstände (R1, R2) aufweisen oder bündig abschließen.

5. Förderband nach Anspruch 1, **dadurch gekennzeichnet, dass** die Querstäbe (12) an der Unterseite des Fördergurts (11) in diesen integriert, angeklebt, anvulkanisiert, angeschraubt, angenietet oder angeklipst sind.

6. Förderband nach Anspruch 1, **dadurch gekennzeichnet, dass** jeder gelenkige Querstab (12) mindestens ein Gelenk (21), vorzugsweise zwei Gelenke (21) beiderseits der Längsmitte des Fördergurts (11), aufweist.

7. Förderband nach Anspruch 1, **dadurch gekennzeichnet, dass** die Zugmittel (Z) Gliederketten (15) oder Zahn- bzw. Keilriemen sind.

8. Förderband nach Anspruch 7, **dadurch gekennzeichnet, dass** die Querstäbe (12) an Kettenbolzen und/oder Kettenlaschen der Gliederketten (15), vorzugsweise abnehmbar, befestigt sind.

9. Förderband nach Anspruch 7, **dadurch gekennzeichnet, dass** jede Gliederkette (15) auf einzeln oder zwischen paarweise angeordneten Rädern (22) geführt ist, vorzugsweise auf Kettenrädern oder Reibrädern.

10. Förderband nach Anspruch 9, **dadurch gekennzeichnet, dass** die Räder (22), zumindest entlang des Fördertrums (OT), um schräggestellte Achsen (20) drehbar sind, die im Bereich der Mulde in etwa parallel zu Tangenten (19) an die Randbereiche des Fördersubstrats (4) sind.

11. Förderband nach wenigstens einem der vorhergehenden Ansprüche, **dadurch gekennzeichnet, dass** in Umkehrbereichen des Förderbands (M) die Mulde (T) weitgehend verflacht ist, und dass, vorzugsweise, die Querabstände zwischen Umlenkrädern (22) des Auffangsystems in den Umkehrbereichen größer sind als die Querabstände von Rädern (22) entlang der Mulde (T).

12. Förderband nach Anspruch 1, **dadurch gekennzeichnet, dass** die Zugmittel (Z), vorzugsweise Gliederketten (15) oder Keil- bzw. Zahnriemen, in Gleitführungen (25), z.B. mit Kunststoffeinsätzen (27, 28), geführt und abgestützt sind.

13. Förderband nach wenigstens einem der vorhergehenden Ansprüche, **dadurch gekennzeichnet, dass** die Förderseite des Fördergurts (11) in den Randbereichen des Fördersubstrats (4) seitenwandfrei exponiert ist.

14. Förderband nach Anspruch 1, **dadurch gekennzeichnet, dass** die Querstäbe (1'2) einen viereckigen, vorzugsweise rechteckig bandartigen, einen runden, einen ovalen oder einen angenähert trapez- oder dreieckigen Querschnitt aufweisen.

15. Förderband nach Anspruch 1, **dadurch gekennzeichnet, dass** die Querschnittsfläche der Querstäbe (12) über die Querstablänge konstant ist oder variiert.
